# EUROPÄISCHE PATENTSCHRIFT

(11) **EP 1 362 999 B1**
(45) Veröffentlichungstag und Bekanntmachung des Hinweises auf die Patenterteilung: **07.09.2005**
(21) Anmeldenummer: 03006348.1
(22) Anmeldetag: 20.03.2003
(51) Int. Cl.: F02B 29/02, F02B 27/02

(54) **Aufladesystem für Brennkraftmaschinen**
Charging system for combustion engines
Système d'alimentation pour moteurs à combustion interne

(30) Priorität: 10.04.2002 DE 10215667
(43) Veröffentlichungstag der Anmeldung: 19.11.2003
(73) Patentinhaber: Pierburg GmbH, 41460 Neuss (DE)
(72) Erfinder: Simons, Norbert, 40221 Düsseldorf (DE)
(74) Vertreter: von Kirschbaum, Alexander

(56) Entgegenhaltungen:
- EP-A- 1 031 712
- WO-A-01/09493
- DE-A- 10 133 942
- US-A- 5 715 782
- US-B1- 6 341 589

## Beschreibung

Die Erfindung betrifft ein Aufladesystem für Brennkraftmaschinen.

Zur Vergleichmäßigung der Drehmomentkennlinie bei Brennkraftmaschinen, insbesondere bei Otto-Motoren, werden Aufladesysteme verwendet. Beispielsweise wird als Aufladesystem ein Zusatzventil, wie ein Lufttaktventil, in einem Saugrohr, das mit der Brennkraftmaschine bzw. dem Zylinder der Brennkraftmaschine verbunden ist, angeordnet. Mit Hilfe des Zusatzventils kann der Ansaugquerschnitt des Saugrohrs schnell geöffnet und geschlossen werden. Durch das Lufttaktventil im Saugrohr kann eine Luftmassenerhöhung im Brennraum erreicht werden. Diese sogenannte dynamische Aufladung wird dadurch erreicht, dass das Öffnen und Schließen des Lufttaktventils in Abhängigkeit der Betriebsparameter des Motors relativ zur Bewegung von Einlassventil und Kolben gesteuert wird. Ein derartiges Impuls-Aufladesystem ist beispielsweise in der Zeitschrift "MTZ" 12/2001, GBV-Fachverlag, Wiesbaden, S. 998-1009, beschrieben. Derartige Impuls-Aufladesysteme sind zwischen dem Saugrohr und dem Zylinder der Brennkraftmaschine angeordnet. Das Vorsehen dieses zusätzlichen Bauteils ruft einen erheblichen Montageaufwand hervor. Insbesondere in der Serienfertigung führt dies zur Erhöhung der Kosten.

In EP 1 031 712 A2 ist eine Vorrichtung zur Impulsaufladung einer Kolbenbrennkraftmaschine beschrieben. Die Vorrichtung weist einen Impulsgeber mit in geöffneten Zustand zur Brennkraftmaschine weisenden Schaltklappen auf, die im geöffneten Zustand in den Ausnehmungen eines Saugrohres angeordnet sind und im geschlossenen Zustand an einem innerhalb des Saugrohres angeordneten Steg von Elektromagneten gehalten anliegen.

Aufgabe der Erfindung ist es, ein einfach montierbares Aufladesystem für Brennkraftmaschinen zu schaffen, bei dem die Strömung im offenen Zustand allenfalls nur geringförmig beeinflusst ist.

Die Lösung der Aufgabe erfolgt erfindungsgemäß durch die Merkmale des Anspruchs 1.

Das erfindungsgemäße Aufladesystem für Brennkraftmaschinen weist einen Impulsgeber mit Ventilklappen auf, die im geöffneten Zustand zur Brennkraftmaschine weisen. Bei dem Impulsgeber handelt es sich beispielsweise um ein Impuls-Aufladesystem oder ein Lufttaktventil. Durch den Impulsgeber, der im Allgemeinen in Abhängigkeit des Betriebszustandes der Brennkraftmaschine bzw. eines Teiles der Brennkraftmaschine, wie der Einlassventile, steuerbar ist, handelt es sich um eine Vorrichtung, durch die beispielsweise die dem Brennraum eines Zylinders zugeführte Luftmenge gesteuert werden kann. Insbesondere ist es möglich, hierdurch die Luftmenge zu erhöhen und somit, insbesondere bei geringen Drehzahlen, die Drehmomentkennlinie zu vergleichmäßigen.

Ferner weist das erfindungsgemäße Aufladesystem ein mit der Brennkraftmaschine, insbesondere einem Zylinder der Brennkraftmaschine, verbindbares Saugrohr auf. Durch das Saugrohr wird der Brennkraftmaschine insbesondere Luft zugeführt. Der Impulsgeber ist innerhalb des Saugrohrs angeordnet. Es ist somit möglich, den Impulsgeber vorzumontieren. In der Serienfertigung kann dann das Saugrohr, in dem der Impulsgeber bereits vormontiert ist, wie bisher üblich, mit dem Zylinder der Brennkraftmaschine verbunden werden. Es ist somit durch das Anordnen des Impulsgebers innerhalb des Saugrohrs nicht erforderlich, ein gesondertes Bauteil, wie ein Impuls-Aufladesystem, einerseits am Zylinder der Brennkraftmaschine anzuschließen und zusätzlich mit dem Saugrohr zu verbinden. Da der Impulsgeber innerhalb des Saugrohrs angeordnet ist, ist es ferner nicht erforderlich, ein Gehäuse für den Impulsgeber sowie entsprechende Anschlüsse für das Saugrohr bzw. den Zylinder der Brennkraftmaschine vorzusehen.

Erfindungsgemäß ist der Impulsgeber derart ausgebildet, dass er an einem Saugrohrende in das Saugrohr eingeschoben werden kann und im geöffneten Zustand einen Strömungskanal des Saugrohrs im Wesentlichen vollständig frei gibt. Die Montage des Impulsgebers ist somit bei allenfalls nur geringfügiger Beeinflussung der Strömung von dem Impulsgeber bei offenem Zustand stark vereinfacht, so dass die Montagetiefe verringert und die Montagekosten reduziert sind. Insbesondere ist es nicht unbedingt erforderlich, den Impulsgeber in dem Saugrohrende zu befestigen. Vielmehr kann der Impulsgeber in das Saugrohr eingeschoben werden und sodann durch die Montage des Saugrohrs an dem Zylinder der Brennkraftmaschine fixiert werden.

Vorzugsweise weist das Saugrohr zur Aufnahme des Impulsgebers eine Ausnehmung auf, die vorzugsweise in einer Wandung des Saugrohrs angeordnet ist. Die Öffnung der Ausnehmung weist vorzugsweise in Richtung des Saugrohrendes, so dass der Impulsgeber am Ende des Saugrohrs eingeschoben werden kann.

Vorzugsweise wird bei der Montage des Saugrohrs an dem Zylinder der Impulsgeber fixiert, wobei eine Außenseite des Impulsgebers an eine Anlagefläche der in dem Saugrohr vorgesehenen Ausnehmung anliegt bzw. angedrückt wird. Vorzugsweise ist zwischen den Anlagenflächen eine Dichtung, insbesondere in Form eines O-Rings, vorgesehen.

Nachfolgend wird die Erfindung anhand einer bevorzugten Ausführungsform unter Bezugnahme auf die anliegende Zeichnung näher erläutert.

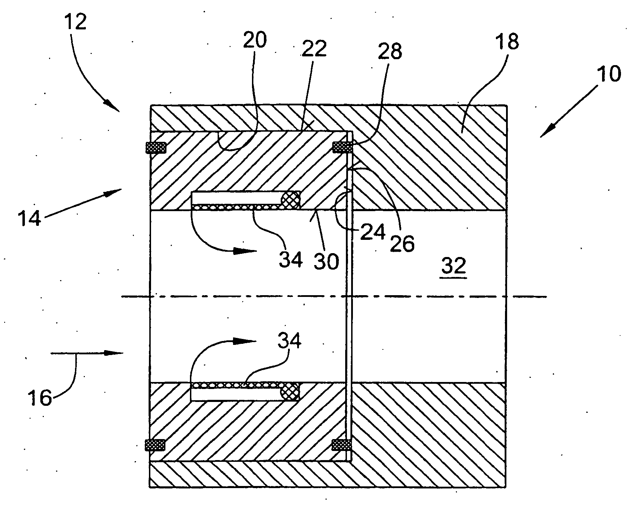

Die Zeichnung zeigt einen schematischen Längsschnitt durch ein Saugrohrende.

Ein Saugrohr 10 ist mit einem Saugrohrende 12 an einer nicht dargestellten Brennkraftmaschine, d.h. einem Zylinder der Brennkraftmaschine, befestigt. Innerhalb des Saugrohrs 10 ist ein Impulsgeber 14, wie ein Lufttaktventil, angeordnet. Zum Einschieben des Impulsgebers 14 in Richtung des Pfeils 16 in das Saugrohr 10 weist das Saugrohr 10 in einer Wandung 18 eine Ausnehmung 20 auf. Die Ausnehmung 20 ist vorzugsweise zylindrisch, besonders bevorzugt kreiszylindrisch, ausgebildet. Das im Querschnitt vorzugsweise runde Saugrohr 18 weist somit im Bereich des Endes 12 eine ebenfalls runde Ausnehmung 20 auf. Der im Wesentlichen als vorzugsweise Kreisring ausgebildete Impulsgeber 14 ist insbesondere derart ausgebildet, dass der Außendurchmesser des Impulsgebers 14 dem Durchmesser der Ausnehmung 20 entspricht, so dass eine Außenseite 22 des Impulsgebers 14 an der Innenwand der Ausnehmung 20 anliegt. Die Ausnehmung 20 weist ferner eine im Wesentlichen radial verlaufende Anlagefläche 24 auf, an der eine Außenseite 26 des Impulsgebers 14 anliegt. Im dargestellten Ausführungsbeispiel handelt es sich bei der Außenseite 26 um die eine Stirnseite des Impulsgebers 14. Zwischen den beiden Seiten 24,26 ist eine Dichtung 28 angeordnet. Die Dichtung ist umlaufend, vorzugsweise als O-Ring, ausgebildet.

Eine Innenseite 30 des Impulsgebers 14 ist vorzugsweise ebenfalls kreiszylindrisch ausgebildet. Der Durchmesser der Innenseite 30 entspricht vorzugsweise im Wesentlichen dem Durchmesser eines Strömungskanals 32 des Saugrohrs 10. In dem dargestellten geöffneten Zustand, in dem Ventilklappen 34 des Impulsgebers 14 geöffnet sind, ist der Strömungskanal 32 im Wesentlichen vollständig freigegeben. Die Strömung wird somit allenfalls nur geringfügig von dem Impulsgeber 14 bei offenem Zustand beeinflusst.

Zur Steuerung der in den Brennraum gelangenden Luftmenge sind die Ventilklappen 34 in Abhängigkeit des Betriebszustandes des Motors, beispielsweise in Abhängigkeit der Stellung des Einlassventils, ansteuerbar. Hierzu sind die Ventilklappen 34 mit einer nicht dargestellten Betätigungseinheit verbunden. Diese ist vorzugsweise innerhalb des Impulsgebers angeordnet, so dass sie ebenfalls innerhalb des Saugrohrs 10 angeordnet ist. Ferner ist der Impulsgeber mit einer Steuereinrichtung verbunden. Die hierzu erforderlichen elektrischen Anschlüsse sind vorzugsweise an einer Außenseite des Saugrohrs 10 angeordnet.

## Patentansprüche

1. Aufladesystem für Brennkraftmaschinen, mit
einem mit der Brennkraftmaschine verbindbaren Saugrohr (10) und
einem innerhalb des Saugrohrs (10) angeordneten Impulsgeber (14), der im geöffneten Zustand zur Brennkraftmaschine weisende Ventilklappen (34) aufweist,
**dadurch gekennzeichnet, dass**
der Impulsgeber (14) in das Saugrohr (10) eingeschoben ist und in geöffnetem Zustand einen Strömungskanal (32) des Saugrohrs (10) vollständig freigibt.

2. Aufladesystem nach Anspruch 1, **gekennzeichnet durch** eine im Saugrohr (10) vorgesehene Ausnehmung (20) zur Aufnahme des Impulsgebers (14).

3. Aufladesystem nach Anspruch 1 oder 2, **dadurch gekennzeichnet, dass** der Impulsgeber (14) in einer Wandung (18) des Saugrohrs angeordnet ist.

4. Aufladesystem nach einem der Ansprüche 1 - 3, **dadurch gekennzeichnet, dass** die Ausnehmung (20) zylindrisch, insbesondere kreiszylindrisch, ist.

5. Aufladesystem nach einem der Ansprüche 2 - 4, **dadurch gekennzeichnet, dass** die Ausnehmung (20) eine Anlagefläche (24) aufweist, an der eine Außenseite (26) des Impulsgebers (14) anliegt und zwischen den Flächen (24,26) eine Dichtung (28) vorgesehen ist.

6. Aufladesystem nach Anspruch 5, **dadurch gekennzeichnet, dass** die Anlagefläche (14) im Wesentlichen radial zum Saugrohr (10) ausgerichtet ist.

## Claims

1. Charging system for combustion engines, comprising
a suction pipe (10) adapted to be connected with the combustion engine, and
a pulse generator (14) arranged within the suction pipe (10), comprising valve flaps (34) directed towards the combustion engine when in the opened state,
**characterized in that**
the pulse generator (14) is inserted into the suction pipe (10) and, in the opened state, completely clears a flow channel (32) of the suction pipe (10).

2. Charging system of claim 1, **characterized by** a recess (20) provided in the suction pipe (10) to receive the pulse generator (14).

3. Charging system of claim 1 or 2, **characterized in that** the pulse generator (14) is arranged in a wall (18) of the suction pipe.

4. Charging system of one of claims 1 - 3, **characterized in that** the recess (20) is cylindrical, in particular circular cylindrical.

5. Charging system of one of claims 2 - 4, **characterized in that** the recess (20) comprises an abutment surface (24) at which an outer side (26) of the pulse generator (14) abuts, a seal (28) being provided between the surfaces (24, 26).

6. Charging system of claim 5, **characterized in that** the abutment surface (14) is oriented substantially radial to the suction pipe (10).

## Revendications

1. Système d'alimentation pour moteurs à combustion interne, comportant
une tubulure d'admission (10) pouvant être reliée au moteur à combustion interne et
un générateur d'impulsions (14) disposé à l'intérieur de la tubulure d'admission (10) qui présente des clapets de vanne (34) orientés vers le moteur à combustion interne à l'état ouvert,
**caractérisé en ce que**
le générateur d'impulsions (14) est inséré dans la tubulure d'admission (10) et, à l'état ouvert, libère complètement un canal d'écoulement (32) de la tubulure d'admission (10).

2. Système d'alimentation selon la revendication 1, **caractérisé par** un évidement (20) prévu dans la tubulure d'admission (10) pour loger le générateur d'impulsions (14).

3. Système d'alimentation selon la revendication 1 ou 2, **caractérisé en ce que** le générateur d'impulsions (14) est disposé dans une paroi (18) de la tubulure d'admission

4. Système d'alimentation selon l'une des revendications 1 à 3, **caractérisé en ce que** l'évidement (20) est cylindrique, en particulier cylindrique circulaire.

5. Système d'alimentation selon l'une des revendications 2 à 4, **caractérisé en ce que** l'évidement (20) présente une surface d'appui (24), à laquelle est accolé un côté extérieur (26) du générateur d'impulsions (14) et qu'un joint d'étanchéité (28) est prévu entre les surfaces (24, 26).

6. Système d'alimentation selon la revendication 5, **caractérisé en ce que** la surface d'appui (14) est orientée essentiellement radialement par rapport à la tubulure d'admission (10).
